# EUROPEAN PATENT APPLICATION

(11) **EP 1 527 686 A1**
(43) Date of publication of application: **04.05.2005**
(21) Application number: 04025428.6
(22) Date of filing: 26.10.2004
(51) Int. Cl.: A01N 49/00, A01N 65/00

(54) **Method and compositions for inhibiting the scent tracking ability of mosquitoes and biting midges**

(30) Priority: 28.10.2003 US 515001 P
(71) Applicant: Bedoukian Reseach Inc., Danbury, CT 06810-4192 (US)
(72) Inventor: Bedukian, Robert H., West Redding, Connecticut 06896 (US)
(74) Representative: VOSSIUS & PARTNER

(57) **Abstract**

The ability of mosquitoes or biting midges to locate a target by olfactory emissions of the target is inhibited by dispensing into a spatial area an inhibiting effective amount of a linalool-containing composition containing at least about 50%, and generally from about 65% to about essentially 100%, particularly compositions that comprise from about 65% to about 85%, and most preferably compositions that comprise about 65%, (S)-(+)-linalool chiral isomer.

## Description

### Field of the Invention

This invention relates to a method and compositions for inhibiting the ability of mosquitoes and biting midges to locate or track a human body by scent detection. More particularly, the invention relates to the use of certain compounds in compositions and a pparatus to inhibit mosquitoes' and biting midges' ability to detect humans by scent detection.

### Background

Compounds, compositions and formulations for protecting human beings from being bitten b y mosquitoes a re known in the art. Generally, these compounds, compositions and formulations are based on their a bility to persist on the skin of the person upon topical or surface application for a time sufficient to repel mosquitoes. Numerous adjuvant materials have been added to mosquito repellants to increase the persistence of the repellents to the skin of a person. However, despite the various attempts to improve the repelling activity of the known mosquito repellents, these attempts have generally not been successful, as almost anyone who has used such mosquito repellents can attest.

Thus, the art has been searching for new a nd more effective repellents against mosquitoes. However, the search for more effective mosquito repellents has not generally been met with success since most mosquito repellents have been found only to possess a limited degree of repellency and are generally not particularly effective. There is, therefore, a need for more effective means to deter mosquitoes from locating and biting humans a nd other targets such as livestock. Moreover, this need has recently become more acute and urgent because mosquitoes have been discovered to be carriers of significant diseases that can be passed on to a target by the mosquitoes biting the target. A further need is to be able to reduce the use of environmentally unfriendly pesticides.

In response to the aforesaid need for a more effective means for deterring mosquitoes from locating and biting humans and other targets, such as livestock, there it has been proposed, by the present inventor and others, in US Patent No. 6,362,235 B1 that 3-methyl-1-alkene-3-ols and 3-methyl-1-alkyn-3-ols are environmentally friendly and suitable for such a purpose. While the compositions containing such ols, such as linalool and dehydrolinalool, disclosed in that patent are suitable for the intended purpose, there is a continued need for even more effective compositions for deterring mosquitoes and biting midges rom locating and biting humans and other targets, such as livestock.

### Summary of the Invention

The inventor has now determined that the linalool employed by the inventors in US Patent No. 6,362,235 B1 was that commercial linalool product obtained from pinene and comprised 35% (S)-(+)-linalool and 65% (R)-(-)-linalool chiral isomers. The inventor has now discovered that (S)-(+)-linalool chiral isomer is a much more effective compound for deterring mosquitoes from locating and biting humans and other targets than is the (R)-(-)-linalool chiral isomer. Linalool-containing compositions that comprise at least about 50%, and generally from about 65% to about essentially 100%, particularly compositions that comprise from about 65% to about 85%, and most preferably compositions that comprise about 65%, (S)-(+)-linalool chiral isomer provide significantly more effective deterring of mosquitoes from locating and biting humans and other targets than the heretofore used commercial linalool product obtained from pinene and comprised 35% (S)-(+)-linalool and 65% (R)-(-)-linalool chiral isomers. Therefore, the present invention provides linalool-containing compositions and formulations containing at least about 50%, and particularly compositions that comprise at least about 85%, and more particularly those that comprise essentially about 100% (S)-(+)-linalool chiral isomer, which compositions are usable in methods and apparatus for inhibiting the olfactory target tracking abilities of mosquitoes when an inhibiting effective amount of the linalool-containing composition having the required amount of (S)-(+)-linalool chiral isomer is dispersed in a three dimensional atmospheric space.

According to this invention, the ability of mosquitoes to locate a target is inhibited by dispensing into a spatial area an inhibiting effective amount of a linalool-containing composition comprising at least about 50%, and generally compositions that comprise at least about 65% to about essentially about 100%, particularly compositions that comprise about 65% to about 85%, and more particularly those that comprise about 65%, (S)-(+)-linalool chiral isomer.

The inhibiting (S)-(+)-linalool chiral isomer compound can be dispensed into the three dimensional atmospheric space by any suitable means sufficient to provide an inhibiting effective amount of the inhibiting compound(s). Such dispensing means includes, for example, evaporation, atomization and ionic dispersion of the inhibiting compound from any suitable composition or formulation. Such composition or formulation will generally comprise a base vehicle containing at least one of the inhibiting compounds.

### Detailed Summary of the Invention

The inventor has now discovered that (S)-(+)-linalool chiral isomer is a much more effective compound for deterring mosquitoes from locating and biting humans and other targets than is the (R)-(-)-linalool chiral isomer. Linalool-containing compositions that comprise at least about 50%, (S)-(+)-linalool chiral isomer provide significantly more effective deterring of mosquitoes from locating and biting humans and other targets than the heretofore used commercial linalool product obtained from pinene and comprised 35% (S)-(+)-linalool and 65% (R)-(-)-linalool chiral isomers. Therefore, the present invention provides linalool-containing compositions and formulations containing at least about 50%, and generally from about 65% to about essentially 100%, particularly compositions that comprise from about 65% to about 85%, and most preferably compositions that comprise about 65% ( S)-(+)-linalool chiral isomer, which compositions are usable in methods and apparatus for inhibiting the olfactory target tracking abilities of mosquitoes when an inhibiting effective amount of the linalool-containing composition having the required amount of (S)-(+)-linalool chiral isomer is dispersed in a three dimensional atmospheric space.

Any suitable inhibiting effective amount of the inhibiting (S)-(+)-linalool chiral isomer may be employed. Such inhibiting effective amounts can include amounts, based on the square footage of land or base surface area of the environmental area to be treated, within the range of from about 0.000005 g/hr/ft² to about 0.006 g/hr/ft², preferably amounts within the range of from about 0.00015 g/hr/ft² to about 0.005 g/hr/ft², and especially an amount of about 0.001 g/hr/ft².

The inhibiting (S)-(+)-linalool chiral isomer for use in this invention may be provided in an essentially pure form or as a component of a composition having the required a concentration of an (S)-(+)-linalool chiral isomer inhibiting compound sufficient to make it practical and feasible to dispense an inhibiting effective amount of said (S)-(+)-linalool chiral isomer inhibiting compound. An example of such a source of (S)-(+)-linalool chiral isomer in the required amount is found in coriander seed oil.

The (S)-(+)-linalool chiral isomer inhibiting compounds of this invention, or compositions containing such (S)-(+)-linalool chiral isomer compounds, may be employed in any formulation suitable for dispensing inhibiting effective amounts of the (S)-(+)-linalool chiral isomer. The (S)-(+)-linalool chiral isomer will generally be employed in formulations comprising a suitable vehicle containing the inhibiting (S)-(+)-linalool chiral isomer compound. For example, the (S)-(+)-linalool chiral isomer inhibiting compound can be formulated in a specially formulated wax-like medium or vehicle engineered to release desired amounts of vaporous inhibiting compound at ambient temperatures, such as those mediums or vehicles available from Koster Keunen of Watertown, Connecticut. An example of such a wax-like medium available from Koster Keunen is known as Insect Repellent Wax Bar No. 9, which is a blend of waxes having the following general composition: fatty acids ranging in carbon chain length of from C₁₆ to C₂₂, fatty alcohols ranging in carbon chain length of from C₁₆ to C₂₂, paraffinic hydrocarbons ranging in carbon chain length of from C₁₉ to C₄₇, branched hydrocarbons ranging in carbon chain length of from C₂₃ to C₆₉, beeswax and other natural waxes such as candelilla and carnauba. The wax mixture will generally be formulated with concentrations of the (S)-(+)-linalool chiral isomer inhibiting compound of this invention ranging from about 20% to 60% and the formulation has a congealing point which may vary from about 75°C to about 45°C. Alternatively, the (S)-(+)-linalool chiral isomer inhibiting compound can be formulated in a porous medium or vehicle suitable for releasing effective amounts of the (S)-(+)-linalool chiral isomer inhibiting compound. As an example of such porous medium or vehicle is a polyester membrane material having micropores encasing a block of inhibiting compound saturated fibers that gradually releases the inhibiting compound so that it permeates the microporous membrane and is released to the environment. Such porous membrane known as World of Fragrance™ cups is available from Waterbury Companies, Inc. of Waterbury, Connecticut. The (S)-(+)-linalool chiral isomer may also be employed in a candle in a canle forming composition and provided to the environment by burning of the candle. Additionally, the (S)-(+)-linalool chiral isomer may be employed as a liquid formulation in a reservoir that has been provided with a suitable wick for dispensing the liquid formulation into the environment.

The formulations can be placed in any suitable container or device for dispensing the (S)-(+)-linalool chiral isomer inhibiting compound. For example, the formulations can be placed in a suitable fan-equipped device so that one can obtain, for example, fan-driven evaporation of the (S)-(+)-linalool chiral isomer inhibiting compound from a porous medium or wax-like medium containing the (S)-(+)-linalool chiral isomer inhibiting compound. As examples of such fan-equipped devices, there can be mentioned the devices disclosed in US Patent 5,370,829 of Waterbury Companies, Inc. and the apparatus disclosed in US Patent 5,799,436 of Biosensory Insect Control Corporation, each of said patents being incorporated herein by reference thereto.

Another suitable means of dispensing the (S)-(+)-linalool chiral isomer inhibiting compound is by atomization and/or ionic dispersion of the compound as suitable-sized, positively-charged droplets from a suitable atomization or ionic dispersing apparatus, such as the Ionic Wind™ device, available from Brandenburg, Ltd. of Brierery Hill, United Kingdom.

The (S)-(+)-linalool chiral isomer of this invention may be employed with other known inhibiting compounds such as for example, the compounds disclosed in US Patent No. 6,362,235 B1, namely 3-methyl-1-alkene-3-ols and 3-methyl-1-alkyn-3-ols, particularly d ehydrolinalool, n erolidol, 3-methyl-1-octen-3-ol. The compounds m ay be used singularly or as mixtures of two or more such compounds.

The (S)-(+)-linalool chiral isomer inhibiting compound of this invention are particularly effective against mosquitoes, such as for example, *Aedes taeniorhyncus* (Black Salt Marsh mosquito), *Culex nigripalpus, Aedes aegypti, Aedes albpictus* (Asian Tiger mosquito), *Culex pipiens* (common house mosquito), and also against biting midges and the like.

The use of this invention is illustrated by the following non-limited example.

### Example

In a test of the inhibiting ability of the (S)-(+)-linalool chiral isomer compound of this invention, the following field test was conducted. The study was conducted in August 2003 on a site in Connecticut. Candles containing the test compound or no compound were placed 18 inches above the ground at the four comers of 7 ft x 7 ft squares, with the squares being placed 50 ft apart. Four subjects (persons) were employed in the tests. On a given day, the subjects were rotated through all four positions of a square. Each day, treatments rotated to the next position, so that each treatment was tested at each site. The landing of mosquitoes on the subject were counted. Landing counts were taken from the arms, legs and torso of a test subject. The landing results of the tests are set forth in Table 1

**TABLE 1**

| **Inhibiting Substance in Candle** | **Four Day Totals of Mosquito Landings On Subjects** |
|---|---|
| Linalool: 85% (+), 15% (-) | 42 |
| Linalool: 35% (+), 65%(-) (prior art) | 82 |
| Citronella (comparative) | 89 |
| None (control) | 152 |

These results indicate the ability of compositions containing at least about (S)-(+)-linalool chiral isomer to greatly reduce the landing counts of *Aedes aegypti* mosquitoes on humans in open areas by inhibiting the mosquitoes' ability to track the human's olfactory emissions compared to the ability of (R)-(-)-linalool to do the same. The linalool: 85% (+), 15% (-) of this invention deterred landing of the mosquitoes to the extend that only 73.5% as many mosquitoes landed in the presence of the linalool: 85% (+), 15% (-) as compared to the number of mosquitoes that landed in the presence of the linalool: 35% (+), 65%(-) of the prior art.

With the foregoing description of the invention, those skilled in the art will appreciate that modifications may be made to the invention without departing from the spirit thereof. Therefore, it is not intended that the scope of the invention be limited to the specific embodiments illustrated and described.

## Claims

1. A method of inhibiting the ability of mosquitoes or biting midges to sense a target by olfactory sensing of the target within a three dimensional environmental space having a land or base surface area, the method comprising dispensing into the atmosphere of the three dimensional environmental space an inhibiting effective amount of at a linalool-containing composition comprising at least about 50% (S)-(+)-linalool chiral isomer.

2. The method of claim 1 wherein the linalool-containing composition comprises at least about 65% (S)-(+)-linalool chiral isomer.

3. The method of claim 1 wherein the linalool-containing composition comprises about 65% to about 85% (S)-(+)-linalool chiral isomer.

4. The method according to Claim 1, wherein the inhibiting effective amount ranges from about 0.000005 g/hr/ft² to about 0.006 g/hr/ft² based on the square footage of the land or base surface area of the environmental space.

5. The method according to Claim 1, wherein the inhibiting effective amount ranges from about 0.00015 g/hr/ft² to about 0.005 g/hr/ft² based on the square footage of the land or base surface area of the environmental space.

6. The method according to Claim 2, wherein the inhibiting effective amount ranges from about 0.000005 g/hr/ft² to about 0.006 g/hr/ft² based on the square footage of the land or base surface area of the environmental space.

7. The method according to Claim 2, wherein the inhibiting effective amount ranges from about 0.00015 g/hr/ft2 to about 0.005 g/hr/ft² based on the square footage of the land or base surface area of the environmental space.

8. The method according to Claim 1, wherein the dispensing of the at least one inhibiting compound comprises dispensing by a method selected from volatilization, evaporation, atomization and ionic dispersion of the (S)-(+)-linalool chiral isomer compound from a formulation comprising a vehicle containing the at least one inhibiting compound.

9. The method according to Claim 8, wherein the dispensing comprises fan-driven evaporation of the (S)-(+)-linalool chiral isomer compound from a formulation in which the vehicle is a porous medium.

10. The method according to Claim 8, wherein the dispensing comprises fan-driven evaporation of the (S)-(+)-linalool chiral isomer compound from a formulation in which the vehicle is a wax-like solution.

11. The method according to Claim 8, wherein the dispensing comprises atomization of the (S)-(+)-linalool chiral isomer compound from the formulation.

12. The method according to Claim 8, wherein the dispensing comprises ionic dispersion of the (S)-(+)-linalool chiral isomer compound from the formulation.

13. The method according to Claim 1, wherein the (S)-(+)-linalool chiral isomer is dispensed by fan-driven evaporation of linalool from a formulation of a porous medium containing linalool.

14. The method according to Claim 1, wherein the (S)-(+)-linalool chiral isomer is dispensed by fan-driven evaporation of linalool from a formulation of a waxy formulation containing linalool.

15. The method according to Claim 1, wherein the (S)-(+)-linalool chiral isomer is dispensed by atomization of linalool from a formulation of a vehicle and the (S)-(+)-linalool chiral isomer.

16. The method according to Claim 1, wherein the (S)-(+)-linalool chiral isomer is dispersed by ionic dispersion of linalool from a formulation of a vehicle and the(S)-(+)-linalool chiral isomer.

17. A composition for inhibiting the ability of mosquitoes or biting midges to sense a target by olfactory sensing of the target within a three dimensional environmental space having a land or base surface area, the composition being a linalool-containing composition comprising at least about 50% (S)-(+)-linalool chiral isomer in a base formulation of a vehicle and the (S)-(+)-linalool chiral isomer capable of permitting sufficient dispersion from the formulation of the (S)-(+)-linalool chiral isomer compound by at least one of evaporation, volatilization, atomization or ionic dispersion sufficient to provide an inhibiting effective amount of said (S)-(+)-linalool chiral isomer compound in an atmosphere of the three dimensional environmental space.

18. The composition according to Claim 17, wherein the composition is sufficient to provide an inhibiting effective a mount of the (S)-(+)-linalool chiral isomer compound ranging from about 0.000005 g/hr/ft² to about 0.006 g/hr/ft² per square footage of the land or base surface area of the three dimensional environmental space.

19. The composition according to Claim 17, wherein the composition is sufficient to provide an inhibiting effective amount of the (S)-(+)-linalool chiral isomer compound ranging from about 0.00015 g/hr/ft2 to about 0.005 g/hr/ft² per square footage of the land or base surface area of the three dimensional environmental space.

20. The composition according to Claim 17, wherein the composition is able to dispense the (S)-(+)-linalool chiral isomer compound by a method selected from volatilization, evaporation, atomization a nd ionic dispersion of the (S)-(+)-linalool chiral isomer compound.

21. The composition according to Claim 20, wherein the composition is dispensable by fan-driven evaporation of the (S)-(+)-linalool chiral isomer compound and the vehicle is a porous medium.

22. The composition according to Claim 20, wherein the composition is dispensable by fan-driven evaporation of the (S)-(+)-linalool chiral isomer compound the vehicle is a waxy formulation.

23. The composition according to Claim 20, wherein the composition is dispensable by atomization of the (S)-(+)-linalool chiral isomer compound.

24. The composition according to Claim 20, wherein the composition is dispensable by ionic dispersion of the (S)-(+)-linalool chiral isomer compound.

25. The composition according to Claim 20, wherein the linalool is dispensable by fan-driven evaporation of (S)-(+)-linalool chiral isomer and the vehicle is of a porous medium containing the (S)-(+)-linalool chiral isomer.

26. The composition according to Claim 20, wherein the (S)-(+)-linalool chiral isomer is dispensable by fan-driven evaporation of (S)-(+)-linalool chiral isomer and the vehicle is of a waxy formulation containing the (S)-(+)-linalool chiral isomer.

27. The composition according to Claim 20, wherein the (S)-(+)-linalool chiral isomer is dispensable by atomization of (S)-(+)-linalool chiral isomer.

28. The composition according to Claim 20, wherein the (S)-(+)-linalool chiral isomer is dispersible by ionic dispersion of (S)-(+)-linalool chiral isomer.
